# EUROPEAN PATENT APPLICATION

(11) **EP 4 654 128 A1**
(43) Date of publication of application: **26.11.2025**
(21) Application number: 23917609.2
(22) Date of filing: 12.10.2023
(51) Int. Cl.: G06T 7/215

(54) **REGION EXTRACTION METHOD, REGION EXTRACTION DEVICE, AND COMPUTER PROGRAM**

(30) Priority: 17.01.2023 JP 2023005264
(71) Applicant: Panasonic Intellectual Property Management Co., Ltd., Kadoma-shi, Osaka 571-0057 (JP)
(72) Inventor: KATSURA, Ukyou, Kadoma-shi, Osaka 571-0057 (JP); MATSUNOBU, Toru, Kadoma-shi, Osaka 571-0057 (JP)
(74) Representative: Eisenführ Speiser
(86) International application number: PCT/JP2023/037055
(87) International publication number: WO 2024/154397

(57) **Abstract**

A region extraction method of the present disclosure is executed by an information processing device including an arithmetic circuit to extract a desired region corresponding a moving object from three-dimensional point cloud information. The method includes: by the arithmetic circuit, receiving three-dimensional point cloud information acquired by a three-dimensional point cloud acquisition device; receiving reference information that includes at least a part of a range of the three-dimensional point cloud information and is acquired under a condition different from the acquisition of the three-dimensional point cloud information; and comparing the three-dimensional point cloud information with the reference information, detecting the moving object, and extracting a region of the moving object from the three-dimensional point cloud information.

## Description

### TECHNICAL FIELD

The present disclosure relates to a region extraction method, a region extraction device, and a computer program for extracting a region corresponding a moving object from three-dimensional point cloud information.

### BACKGROUND ART

In recent years, use of three-dimensional point cloud data has become widespread. Three-dimensional point cloud data may also be used as machine learning data. As described above, in order to use the three-dimensional point cloud data as the machine learning data, it is necessary to perform annotation processing and label a target region included in the three-dimensional point cloud data. Therefore, various techniques for labeling three-dimensional point cloud data have been studied (see, for example, Patent Document 1).

### PRIOR ART DOCUMENT

### PATENT DOCUMENT

Patent Document 1: WO 2020/179065 A

### SUMMARY

### PROBLEMS TO BE SOLVED

However, since the three-dimensional point cloud data is a collection of points, information represented by the data is difficult to understand as compared with two-dimensional image data captured by a general camera or the like, and thus it is difficult not only to perform labeling but also to extract a region to be labeled.

The present disclosure provides a region extraction method, a region extraction device, and a computer program for extracting a region corresponding a moving object from three-dimensional point cloud information including the moving object that is a target of annotation processing in order to facilitate annotation to the moving object in three-dimensional point cloud data.

### SOLUTIONS TO THE PROBLEMS

A region extraction method of the present disclosure is executed by an information processing device including an arithmetic circuit to extract a desired region corresponding a moving object from three-dimensional point cloud information. The method includes: by the arithmetic circuit, receiving three-dimensional point cloud information acquired by a three-dimensional point cloud acquisition device; receiving reference information that includes at least a part of a range of the three-dimensional point cloud information and is acquired under a condition different from the acquisition of the three-dimensional point cloud information; and comparing the three-dimensional point cloud information with the reference information, detecting the moving object, and extracting a region of the moving object from the three-dimensional point cloud information.

These general and specific aspects may be implemented by a system, a method, and a computer program, and a combination thereof.

### EFFECTS OF THE INVENTION

According to the present disclosure, the region extraction method, the region extraction device, and the computer program can extract a region corresponding a moving object from three-dimensional point cloud information.

### BRIEF DESCRIPTION OF THE DRAWINGS

[Fig. 1] Fig. 1 shows a block diagram illustrating a region extraction system according to a first embodiment.
[Fig. 2A] Fig. 2A shows a schematic diagram illustrating reference information used in the region extraction system in Fig. 1.
[Fig. 2B] Fig. 2B shows a schematic diagram illustrating three-dimensional point cloud information used in the region extraction system in Fig. 1.
[Fig. 2C] Fig. 2C shows a schematic diagram illustrating detection of a moving object from three-dimensional point cloud information in the region extraction system in Fig. 1.
[Fig. 2D] Fig. 2D shows a schematic diagram illustrating detection of a moving object from three-dimensional point cloud information in the region extraction system in Fig. 1, following Fig. 2C.
[Fig. 2E] Fig. 2E shows a schematic diagram illustrating detection of a moving object from three-dimensional point cloud information in Fig. 2B.
[Fig. 3A] Fig. 3A shows an example of a distribution of point cloud in a case where an object used for similarity determination is a sphere.
[Fig. 3B] Fig. 3B shows an example of a distribution of point cloud in a case where an object used for similarity determination is a plane.
[Fig. 3C] Fig. 3C shows an example of a distribution of point cloud in a case where an object used for similarity determination is a line.
[Fig. 3D] Fig. 3D shows an example of a distribution of point cloud in a case where the object is a line having an angle different from that in Fig. 3C.
[Fig. 4] Fig. 4 shows a flowchart illustrating a region extraction method according to the first embodiment.
[Fig. 5] Fig. 5 shows a block diagram illustrating a region extraction system according to a second embodiment.
[Fig. 6] Fig. 6 shows a flowchart illustrating a region extraction method according to the second embodiment.
[Fig. 7] Fig. 7 shows F a block diagram illustrating a region extraction system according to a third embodiment.
[Fig. 8] Fig. 8 shows a flowchart illustrating a region extraction method according to the third embodiment.
[Fig. 9] Fig. 9 shows a block diagram illustrating a region extraction system according to a modification 1.
[Fig. 10] Fig. 10 shows a block diagram illustrating a region extraction system according to a modification 2.

### DETAILED DESCRIPTION

### Embodiments

Hereinafter, embodiments of the present disclosure will be described with reference to the drawings. However, in the detailed description, unnecessary parts in the description of the conventional technique and the substantially same configuration may be omitted. This is to simplify the description. In addition, the following description and the accompanying drawings are disclosed so that those skilled in the art can fully understand the present disclosure, and are not intended to limit the subject matter of the claims. In the following description of each embodiment, the same components are denoted by the same reference numerals, and the description thereof will be omitted.

A region extraction system, a region extraction device, a region extraction method, and a computer program according to the present disclosure extract a desired region corresponding a moving object from three-dimensional point cloud information in which a target moving object exists. Specifically, the region extraction system compares three-dimensional point cloud information acquired by a three-dimensional point cloud acquisition device with reference information that includes at least a part of a range of the three-dimensional point cloud information and is acquired under a condition different from the acquisition of the three-dimensional point cloud information, detects a moving object using the comparison result, and extracts a region of the moving object from the three-dimensional point cloud information. By extracting the region of the moving object from the three-dimensional point cloud information, for example, the annotation can be simplified. For example, the region extraction system, the region extraction device, the region extraction method, and the computer program may be used when extracting a worker who works while moving in a factory as a target for the purpose of achieving safety, efficiency, and the like in the factory. Alternatively, the region extraction system, the region extraction device, the region extraction method, and the computer program may be used when extracting a worker who works while moving in the warehouse and a vehicle such as a forklift for the purpose of improving safety and efficiency in the warehouse.

### <First Embodiment>

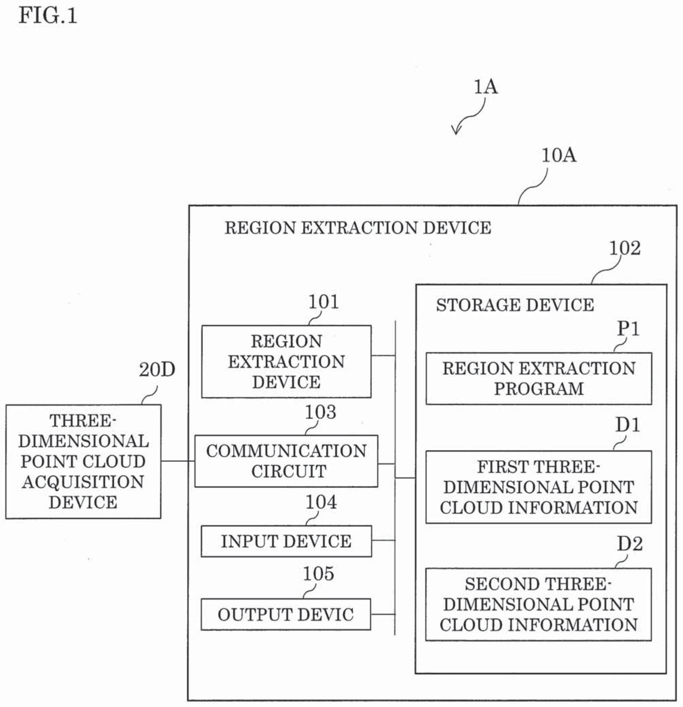

A region extraction system 1A according to a first embodiment will be described with reference to Fig. 1. A region extraction system 1A according to the first embodiment includes a region extraction device 10A and a three-dimensional point cloud acquisition device 20A. In the region extraction system 1A according to the first embodiment, a moving object is detected using a difference between first three-dimensional point cloud information and second three-dimensional point cloud information acquired at timing different from the first three-dimensional point cloud information.

### <<Three-Dimensional Point cloud Acquisition Device>>

The three-dimensional point cloud acquisition device 20A is a device capable of acquiring three-dimensional point cloud information of the surrounding environment using, for example, at least one of light detection and ranging (LiDAR) technology, a time of flight (ToF) camera, a stereo camera, or the like. In the region extraction system 1A according to the first embodiment, an example in which the three-dimensional point cloud acquisition device 20A is fixed in a space where a moving object exists will be described.

For example, in the case of using the LiDAR technology, the three-dimensional point cloud acquisition device 20A measures a distance to an object present within a measurable distance range from the LiDAR sensor. More specifically, the three-dimensional point cloud acquisition device 20A uses the LiDAR sensor to periodically radiate laser light having a wavelength of, for example, about 900nm or a wavelength of 1400nm or more (for example, 1500nm) to the surroundings and scan the surrounding environment. The LiDAR sensor detects reflected light of laser light reflected by an object in the environment. The time difference between the emission time and the reception time of the laser light represents a time length required for the laser light to travel a reciprocating distance to the object. A value of half of the product of the time length and the speed of light is the distance to the object.

The three-dimensional point cloud acquisition device 20A acquires a set of positions of each reflection point as point cloud. The three-dimensional point cloud acquisition device 20A typically has a horizontal plane as a scan plane, and may further have a plurality of scan planes having different elevation angles and/or depression angles. As a result, the point cloud of the three-dimensional space can be acquired.

### <<Region Extraction Device>>

As illustrated in Fig. 1, a region extraction device 10A is an information processing device including an arithmetic circuit 101, a storage device 102, a communication circuit 103, an input device 104, an output device 105, and the like.

The arithmetic circuit 101 is a controller that controls the entire region extraction device 10A. For example, the arithmetic circuit 101 reads and executes a region extraction program P1, which is a computer program stored in the storage device 102, thereby implementing processing such as comparison processing, detection processing, and extraction processing for executing region extraction. Furthermore, the arithmetic circuit 101 may be various processors such as a CPU, an MPU, a GPU, an FPGA, a DSP, and an ASIC, or a hardware circuit designed exclusively.

The storage device 102 is a recording medium that records various types of information. The storage device 102 is realized by, for example, a RAM, a ROM, a flash memory, a solid state drive (SSD), a hard disk drive, other storage devices, or an appropriate combination thereof. The storage device 102 stores the region extraction program P1 executed by the arithmetic circuit 10 and various data used for executing region extraction. For example, the storage device 102 stores first three-dimensional point cloud information D1 acquired by the three-dimensional point cloud acquisition device 20A, second three-dimensional point cloud information D2 that is reference information, and the like.

The communication circuit 103 is a communication means for enabling data communication with an external device (for example, the three-dimensional point cloud acquisition device 20A and the like). The data communication described above is wired and/or wireless data communication, and can be performed according to a known communication standard. For example, wired data communication is performed by using, as the communication circuit 103, a communication controller of a semiconductor integrated circuit that operates in conformity with the Ethernet (registered trademark) standard and/or the USB (registered trademark) standard. In addition, wireless data communication is performed by using, as the communication device 12, a communication controller of a semiconductor integrated circuit that operates in accordance with the IEEE802.11 standard related to a local region network (LAN) and/or a fourth generation/fifth generation mobile communication system called 4G/5G related to mobile communication.

The input device 104 is an input means such as an operation button, a keyboard, a mouse, a touch panel, and a microphone used for operation and data input. Furthermore, the output device 105 is an output means such as a display or a speaker used for outputting a processing result or data.

### (Reception of First Three-Dimensional Point cloud Information D1)

The arithmetic circuit 101 receives the three-dimensional point cloud information D1 acquired by the three-dimensional point cloud acquisition device 20A via the communication circuit 103. The arithmetic circuit 101 stores the received three-dimensional point cloud information D1 in the storage device 102. In the first embodiment, three-dimensional point cloud information handled by the region extraction system 1A will be described as the first three-dimensional point cloud information D1.

### (Reception of Second Three-Dimensional Point cloud Information D2)

In addition, the arithmetic circuit 101 receives, via the communication circuit 103, reference information that includes at least a part of a range of the first three-dimensional point cloud information D1 and is acquired under a condition different from the acquisition of the first three-dimensional point cloud information D1. Here, the reference information acquired by the arithmetic circuit 101 is the second three-dimensional point cloud information D2 acquired by the three-dimensional point cloud acquisition device 20A at a timing different from that of the first three-dimensional point cloud information D1. The arithmetic circuit 101 stores the received second three-dimensional point cloud information D2 in the storage device 102. Specifically, the timing of acquiring the second three-dimensional point cloud information D2 is a time before the time of acquiring the first three-dimensional point cloud information D1. In the following description, the acquisition time of the first three-dimensional point cloud information D1 is t + n (seconds), and the acquisition time of the second three-dimensional point cloud information D2 is t. Therefore, here, an example in which the three-dimensional point cloud acquisition device 20A acquires the three-dimensional point cloud information every n seconds and uses the three-dimensional point cloud information D2 acquired n seconds before as the reference information for each three-dimensional point cloud information will be described. The presence or absence of a moving object may be detected by further comparing the second three-dimensional point cloud information D2 with the three-dimensional point cloud information acquired n seconds before of the acquisition of the second three-dimensional point cloud information D2. At this time, the second three-dimensional point cloud information D2 can include a result of "presence of moving object" or "no moving object" for each voxel set in the three-dimensional space. Each voxel is set at a point in time when the three-dimensional point cloud information is initially acquired in order to handle the three-dimensional point cloud information of the space. The second three-dimensional point cloud information D2 associates coordinates specifying each voxel. Further, when three-dimensional point cloud information is newly acquired after n seconds, the newly acquired three-dimensional point cloud information becomes new first three-dimensional point cloud information, and the current first three-dimensional point cloud information D1 becomes new second three-dimensional point cloud information. That is, the first three-dimensional point cloud information D1 and the second three-dimensional point cloud information D2 are updated every time the three-dimensional point cloud information is acquired every n seconds. Although not described herein, the past second three-dimensional point cloud information may be stored in the storage device 102 or the like as history data of the three-dimensional point cloud information.

### (Detection of Moving Object)

The arithmetic circuit 101 detects a moving object by obtaining a difference between the first three-dimensional point cloud information D1 and the second three-dimensional point cloud information D2. Here, when the three-dimensional point cloud acquisition device 20A is fixed, the first three-dimensional point cloud information D1 and the second three-dimensional point cloud information D2 include point clouds in the same range acquired at different timings. For example, when the three-dimensional point cloud acquisition device 20A is fixed, the first three-dimensional point cloud information D1 and the second three-dimensional point cloud information D2 are compared, and a moving object is detected using a different portion. Specifically, in a case where a person moves in the space of an acquisition target of the three-dimensional point cloud information of the three-dimensional point cloud acquisition device 20A, the position thereof changes between time t and time t + n. As a result, a difference is generated between the first three-dimensional point cloud information D1 and the second three-dimensional point cloud information D2, and a person can be detected as a moving object. However, since the positions of facilities, instruments, and the like fixedly installed in the same space do not change between the time t and the time t + n, there is no difference between the three-dimensional point cloud information D1 and the second three-dimensional point cloud information D2, and thus, the facilities, instruments, and the like are not detected as a moving object. Therefore, when comparing the three-dimensional point cloud information D1 and D2 acquired at different timings, the point cloud included only in any one of the three-dimensional point cloud information D1 and D2 is detected as the moving object.

### · Step 1: Setting of Voxel

In order to detect a moving object, the arithmetic circuit 101 first sets voxels in the first three-dimensional point cloud information D1 in accordance with the voxels set in the second three-dimensional point cloud information D2. Corresponding voxels of the first three-dimensional point cloud information D1 and the second three-dimensional point cloud information D2 indicate the same range in the space of a detection target of the moving object.

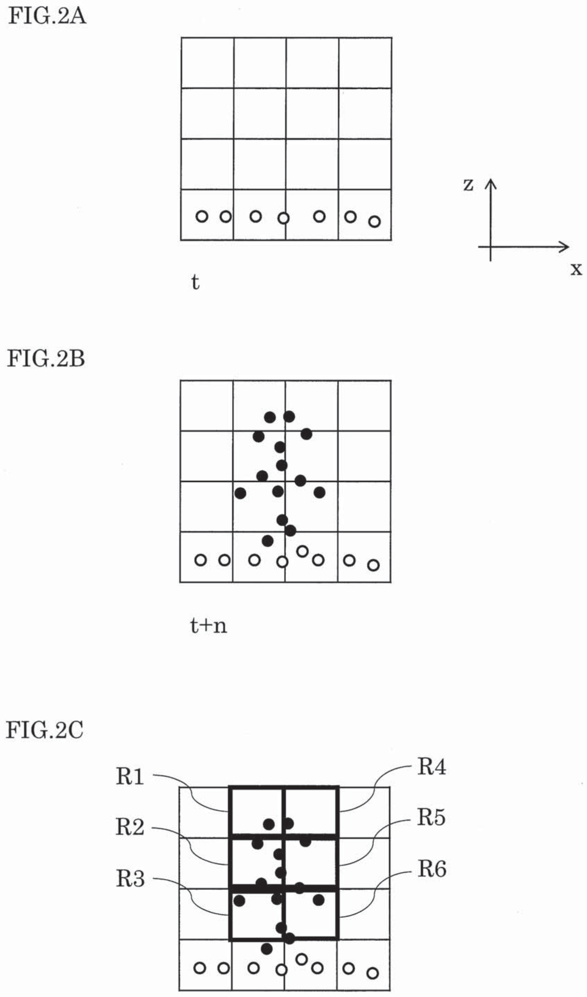

Fig. 2A illustrates an example in which the first three-dimensional point cloud information D1 acquired at time t is divided into grids. Fig. 2B illustrates an example in which the second three-dimensional point cloud information D2 acquired at the time tn is divided into grids. Here, it is also assumed that the first three-dimensional point cloud information D1 of Fig. 2A is divided in accordance with the second grids of Fig. 2B. Each point included in the three-dimensional point cloud information is represented in three dimensions of an x axis, a y axis, and a z axis, and a three-dimensional space is treated as a voxel. For the sake of simplicity, in Figs. 2A and 2B, only two-dimensional information of the x axis and the z axis is illustrated and described using a two-dimensional grid. In Figs. 2A and 2B, white and black points indicate point clouds forming three-dimensional point cloud information D1 and D2, respectively. Here, the white point is a point included in both the first three-dimensional point cloud information D1 and the second three-dimensional point cloud information D2. In addition, the black point is a point included only in the second three-dimensional point cloud information D2. The white point and the black point are used for comparison in Figs. 2A and 2B, and both are the point clouds acquired without distinction in the three-dimensional point cloud acquisition device 20A.

### · Step2: Determining Presence/Absence of Point cloud in Each Voxel

In a case where the arithmetic circuit 101 sets voxels in the first three-dimensional point cloud information D1 and the second three-dimensional point cloud information D2, the arithmetic circuit 101 determines matching of presence of absence of point cloud for each corresponding voxel. At this time, for each corresponding voxel, in a case where the first three-dimensional point cloud information D1 does not include point cloud, but the second three-dimensional point cloud information D2 includes point cloud, the arithmetic circuit 101 can determine that the state has changed from "no moving object" to "presence of moving object". On the other hand, in a case where the point cloud is included in the first three-dimensional point cloud information D1, but the point cloud is not included in the second three-dimensional point cloud information D2, it can be determined that the state has changed from "presence of moving object" to "no moving object".

Comparing the grids represented by the grids of Fig. 2A with the grids represented by the grids of Fig. 2B, in the grids of R1 to R6, the point cloud is not included in the first three-dimensional point cloud information D1, but the point cloud is included in the second three-dimensional point cloud information D2. Therefore, as illustrated in Fig. 2C, the arithmetic circuit 101 can determine that the grids of R1 to R6 has changed from "no moving object" to "presence of moving object".

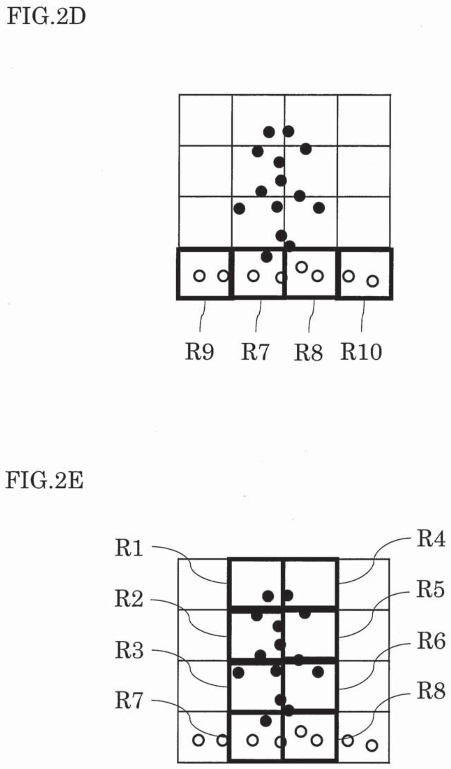

In addition, in a case where point cloud is included in both corresponding voxels in the first three-dimensional point cloud information D1 and the second three-dimensional point cloud information D2, the arithmetic circuit 101 selects the voxel as a target for determining similarity. Specifically, the arithmetic circuit 101 selects a voxel that is indicated as "presence of moving object" in the first three-dimensional point cloud information D1 and "presence of moving object" in the second three-dimensional point cloud information D2 as a voxel to be determined for similarity. In the example illustrated in Fig. 2D, an example is illustrated in which the arithmetic circuit 101 selects the grids of R7 to R10 from the second three-dimensional point cloud information D2 as targets for determining similarity. Although not illustrated, the arithmetic circuit 101 also selects grids corresponding to R7 to R10 as targets of similarity from the first three-dimensional point cloud information D1.

### · Step3: Determining Similarity for Each Voxel

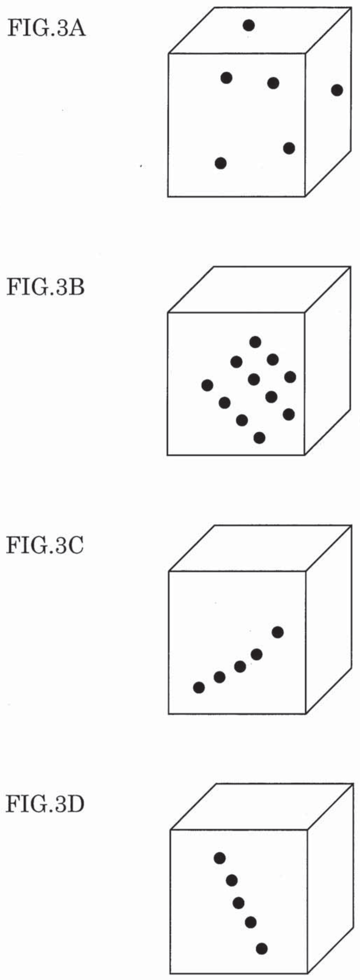

The arithmetic circuit 101 calculates similarity for each corresponding voxel selected as a target for determining similarity, and determines similarity or dissimilarity.
(1) First, the arithmetic circuit 101 calculates three eigenvalues. Specifically, the arithmetic circuit 101 calculates three eigenvalues and three eigenvectors of the variance-covariance matrix using the principal component analysis with respect to the point cloud.
(2) Next, the arithmetic circuit 101 sets the acquired three eigenvalues as λ1, λ2, and λ3 in ascending order of the eigenvalues. Specifically, the arithmetic circuit 101 classifies the shape of the object indicated by the point cloud from each relationship. When λ3≈λ2≈λ1>0, and each point of the point cloud is evenly scattered as illustrated in Fig. 3A, the arithmetic circuit 101 classifies the object indicated by the point cloud as "spherical". In addition, when λ3>λ2≈λ1≈0, and each point of the point cloud is in a state of being scattered on a plane as illustrated in Fig. 3B, the arithmetic circuit 101 classifies the object indicated by the point cloud as "sheet-like". Furthermore, when λ3 ≈ λ2>λ1 ≈ 0, and each point of the point cloud is in a state of being scattered on a line as illustrated in Fig. 3C, the arithmetic circuit 101 classifies the object indicated by the point cloud as "linear".
(3) Thereafter, the arithmetic circuit 101 determines similarity or dissimilarity by using the eigenvalues λ1, λ2, and λ3 and a threshold determined in advance for each shape. Specifically, the arithmetic circuit 101 calculates similarity between the eigenvalue acquired by the first three-dimensional point cloud information D1 and the eigenvalue acquired by the second three-dimensional point cloud information D2, and compares the acquired similarities with a similarity threshold set in advance for each shape to determine similarity or dissimilarity. For example, the example illustrated in Fig. 3C and the example illustrated in Fig. 3D are both "linear" but have different angles, and thus the arithmetic circuit 101 determines that the acquired similarity is dissimilar when comparing the similarity with the threshold.

### · Step4: Detecting Moving Object in Each Voxel

The arithmetic circuit 101 detects presence or absence of a moving object in the first three-dimensional point cloud information D1 according to a determination result of similarity or dissimilarity for each voxel. Specifically, the arithmetic circuit 101 detects a moving object according to the determination result of similarity or dissimilarity and the presence or absence of the moving object included in the second three-dimensional point cloud information D2. In the example illustrated in Fig. 2D, the grids of R7 and R8 among the grids of R7 to R10 are determined to be dissimilar, and it can be determined that the "no moving object" has changed to the "presence of moving object".

Specifically, in the voxel determined to be "dissimilar", when the detection result of the moving object included in the second three-dimensional point cloud information D2 is "no moving object", it means that some change has occurred in the voxel not including the moving object. In other words, it can be considered that the moving object appears in this voxel. Therefore, the arithmetic circuit 101 detects that "presence of moving object" in the voxel in the first three-dimensional point cloud information D1.

On the other hand, in the voxel determined to be "dissimilar", when the detection result of the moving object included in the second three-dimensional point cloud information D2 is "presence of moving object", it means that a change has occurred in the voxel including the moving object. In other words, it can be considered that the moving object moves and disappears from this voxel. Therefore, the arithmetic circuit 101 detects "no moving object" in the voxel in the first three-dimensional point cloud information D1.

Furthermore, in a voxel determined to be "similar", when the detection result of the moving object included in the second three-dimensional point cloud information D2 is "no moving object", it means that there is no change in voxels not including the moving object. Therefore, the arithmetic circuit 101 detects "no moving object" in the voxel in the first three-dimensional point cloud information D1.

On the other hand, in the voxel determined as "similar", when the detection result of the moving object included in the second three-dimensional point cloud information D2 is "presence of moving object", it means that there is no change in the voxel including the moving object. In other words, it means that the moving object remains without moving for n seconds. Therefore, the arithmetic circuit 101 detects that "presence of moving object" in the voxel in the first three-dimensional point cloud information D1.

The arithmetic circuit 101 can detect the voxel of the second three-dimensional "presence of moving object" by combining the results of each determination in Steps 1 to 4 described above. Furthermore, since the range of the voxel group determined as "presence of moving object" is the region which is an annotation target, the voxel group is to be extracted for annotation in the processing of extracting a region of moving object to be described later. On the other hand, even if the voxel group was "presence of moving object" n seconds ago, if the voxel group is changed to "no moving object" in the current extraction, the voxel group is not extracted and is not annotated in the processing of extracting the region of moving object.

Therefore, in the example described above with reference to Figs. 2A to 2D, the arithmetic circuit 101 detects the regions R1 to R8 illustrated in Fig. 2E as the regions of moving object. As described above, the arithmetic circuit 101 can detect the moving object in the space from the three-dimensional point cloud information D1 and the second three-dimensional point cloud information D2 acquired at different timings for the same space, and can set the moving object as the target of the annotation.

### (Extraction of Region of Moving Object)

The arithmetic circuit 101 extracts a region corresponding a moving object from the first three-dimensional point cloud information D1 using the detection result using the first three-dimensional point cloud information D1 and the second three-dimensional point cloud information D2. For example, the arithmetic circuit 101 may extract, from the first three-dimensional point cloud information D1, a region of a voxel detected as "presence of moving object" as the region of moving object. In the example of Fig. 2E, the arithmetic circuit 101 may set the entire range of the grids of R1 to R8 detected as presence of moving object as the region of moving object. Alternatively, the region of moving object may be set based only on the range in which the point cloud exists in the voxel detected as "presence of moving object". In addition, when it is known that the moving object existing in the target space is of the specific type (for example, a person, an automobile of a specific size, or the like), a region having a size determined in advance according to the type of the moving object may be set as the region of moving object in the voxel detected as "presence of moving object".

### (Labeling)

The arithmetic circuit 101 may perform annotation by adding a label to the extracted region. For example, when it is known that the moving object present in the target space is of a specific type, the type of the moving object can be given as a label of the moving object. For example, when it is known that only a person is a moving object existing in the target space, a label "person" may be added to all the extracted regions of moving object. In addition, for example, if it is known that only a person and a car having different sizes exist in the target space, the label "person" may be added when the extracted region of moving object corresponds to a person, and the label "car" may be added when the extracted region of moving object corresponds to a car.

Note that the arithmetic circuit 101 may display the three-dimensional point cloud information D2 including the extracted region of moving object on the output device 105, which is a display, and prompt a user to assign a label via the input device 104. In addition, the arithmetic circuit 101 may also display the three-dimensional point cloud information D2 including the region of moving object on the output device 105 to prompt the user to correct the range of the extracted region of moving object via the input device 104 as necessary.

### <<Region Extraction Method>>

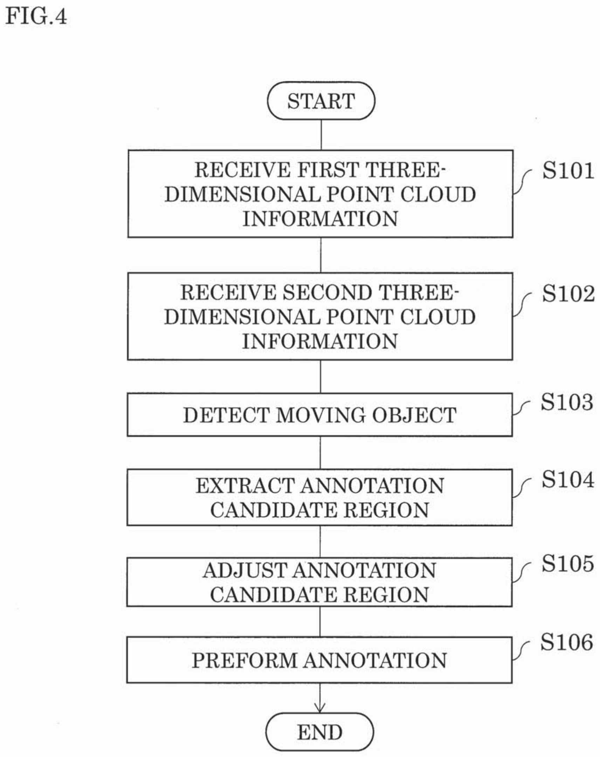

A region extraction method using the region extraction device 10A according to the first embodiment will be described with reference to a flowchart illustrated in Fig. 4. Since specific processing of individual steps of the flowchart has been described above, each step will be described in a simplified manner.

First, the arithmetic circuit 101 receives the first three-dimensional point cloud information D1 acquired by the three-dimensional point cloud acquisition device 20A (S101). At this time, the arithmetic circuit 101 stores the received first three-dimensional point cloud information D1 in the storage device 102.

The arithmetic circuit 101 receives the second three-dimensional point cloud information D2 acquired by the three-dimensional point cloud acquisition device 20A as reference information (S102). At this time, the arithmetic circuit 101 stores the received second three-dimensional point cloud information D2 in the storage device 102.

Subsequently, the arithmetic circuit 101 detects a moving object from the first three-dimensional point cloud information D1 using a difference between the first three-dimensional point cloud information D1 received in step S101 and the second three-dimensional point cloud information D2 received in step S102 (S103).

Thereafter, the arithmetic circuit 101 extracts a region of moving object detected in step S103 from the first three-dimensional point cloud information D1 as an annotation candidate region (S104).

Next, the arithmetic circuit 101 may display the first three-dimensional point cloud information D1 including the annotation candidate region extracted in step S104 on the output device 105, and allow a user to adjust the annotation candidate region (S105).

Furthermore, the arithmetic circuit 101 may add a label to the annotation candidate region extracted in step S104 or the annotation candidate region adjusted in step S105, and preform annotation (S106). As described above, in a case where there is only one type of moving object or in a case where the type of the moving object can be easily specified because the size of the moving object is known, the arithmetic circuit 101 can easily perform annotation, but may allow the user to adjust the annotation candidate region when the type of the moving object cannot be easily specified.

Note that the order of the processing illustrated in the flowchart of Fig. 4 is not necessarily limited thereto. For example, for processes that can be rearranged, the order of some processes may be rearranged. Furthermore, for example, a plurality of processes that can be executed simultaneously may be executed simultaneously.

As described above, the region extraction system 1A according to the first embodiment can extract the region of the moving object by comparing the three-dimensional point cloud information D1 and D2 acquired at different timings. Since the region of moving object extracted in this manner can be an annotation candidate region, the annotation of the three-dimensional point cloud information can be simplified.

### <Second Embodiment>

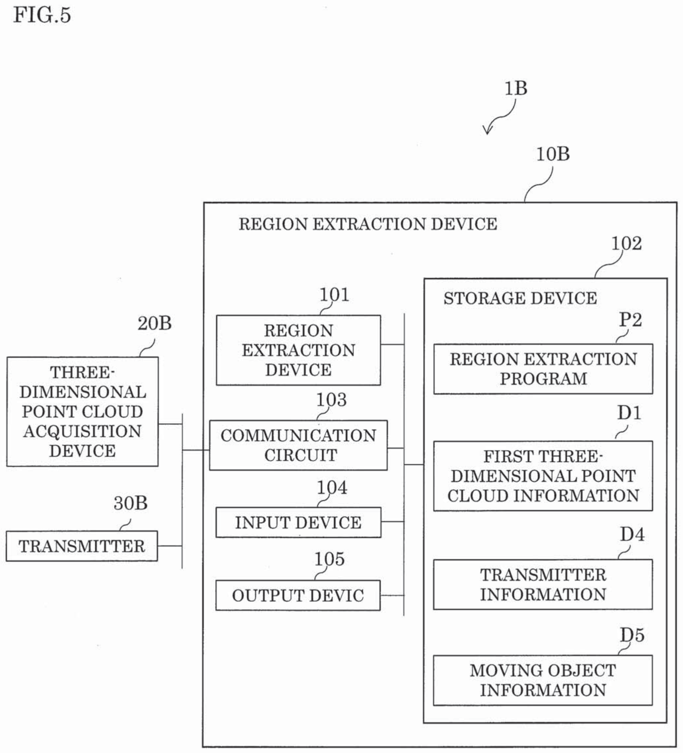

As illustrated in Fig. 5, a region extraction system 1B according to the second embodiment includes a region extraction device 10B, a three-dimensional point cloud acquisition device 20B, and a transmitter 30B held by a moving object. The region extraction system 1B receives and uses transmitter information including identification information of the transmitter 30B and position information of the transmitter 30B from the transmitter 30B as reference information.

### <<Transmitter>>

The transmitter 30B is held in advance in a moving object which is to be a target of region extraction by the region extraction system 1B. The transmitter 30B transmits the transmitter information D4 including the identification information assigned to the transmitter 30B and the position information of the transmitter 30B to the region extraction system as reference information. The transmitter information D4 includes the time when the position information is acquired. The transmitter 30B can receive a signal transmitted from a base station which is a predetermined transmission source used as a beacon, for example, and can specify three-dimensional position information of the transmitter 30B itself. The transmitter 30B associates the identification information of the own device assigned in advance with the position information of the own device specified using a signal received from the beacon, generates the transmitter information D4, and transmits the transmitter information D4 to the region extraction device 10B. The transmitter 30B does not need to be a dedicated device of the region extraction system 1B. For example, when the moving object is a person, a mobile terminal such as a smartphone possessed by the person may be used as the transmitter 30B. Note that, if the three-dimensional position information of the own device can be specified, the transmitter 30B can use various technologies capable of acquiring the position information of the transmission source, such as UWB, Bluetooth, and GPS, in addition to the beacon. Furthermore, the transmitter 30B may use a technology capable of specifying three-dimensional position information using a camera provided in the transmitter 20 using a visual SLAM technology.

### <<Three-Dimensional Point cloud Acquisition Device>>

Similarly to the three-dimensional point cloud acquisition device 20A described above with reference to Fig. 1, the three-dimensional point cloud acquisition device 20B acquires the three-dimensional point cloud information D1 and transmits the three-dimensional point cloud information D1 to the region extraction device 10B. At this time, similarly to the transmitter 30B, the three-dimensional point cloud acquisition device 20B can receive a signal transmitted from a base station 40B and specify the position of the own device. In addition, the three-dimensional point cloud acquisition device 20B specifies the position of the own device when acquiring the three-dimensional point cloud information D1, and transmits the three-dimensional point cloud information D1 associated with the position information of the own device to the region extraction device 10B. The three-dimensional point cloud information D1 includes time when the three-dimensional point cloud information D1 is acquired.

Here, the specification of the position information in the transmitter 30B and the acquisition of the three-dimensional point cloud information D1 and the position information in the three-dimensional point cloud acquisition device 20B are synchronized. Therefore, the region extraction device 10B can detect the position of the moving object at the time of acquiring the three-dimensional point cloud information D1 by using the three-dimensional point cloud information D1 acquired at the same timing (same time) and the transmitter information D4 which is the reference information.

### <<Region Extraction Device>>

The region extraction device 10B is an information processing device including the arithmetic circuit 101, the storage device 102, the communication circuit 103, the input device 104, the output device 105, and the like, similarly to the region extraction device 10A described above with reference to Fig. 1. The storage device 102 of the region extraction device 10B is different from the storage device 102 of the region extraction device 10A described above with reference to Fig. 1 in that a moving object extraction program P2, the three-dimensional point cloud information D1, the transmitter information D4, and moving object information D5 are stored. The moving object extraction program P2 is used for extracting a region of moving object. The three-dimensional point cloud information D1 is information acquired by the three-dimensional point cloud acquisition device 20B. The transmitter information D4 is reference information. The moving object information D5 is information on a moving object associated with the transmitter 30B.

The moving object information D5 can include, for example, identification information of the moving object, size information of the moving object, label information given to the moving object, identification information of the transmitter 30B held by the moving object, and the like. The moving object information D5 is generated in advance for a moving object to be a target of region extraction, and is stored in the storage device 102. For example, in a case where the moving object is a person, information for extracting a region corresponding to a range of 50cm×50cm×180cm from the three-dimensional point cloud information is associated as the size information.

### (Acquisition of Three-Dimensional Point cloud Information)

The arithmetic circuit 101 receives the three-dimensional point cloud information D1 acquired by the three-dimensional point cloud acquisition device 20B. In addition, the arithmetic circuit 101 stores the received three-dimensional point cloud information D1 in the storage device 102.

### (Acquisition of Transmitter Information)

The arithmetic circuit 101 receives the transmitter information D4 generated by the transmitter 30B as the reference information. In addition, the arithmetic circuit 101 stores the received transmitter information D4 in the storage device 102.

### (Detection of Moving Object)

The arithmetic circuit 101 reads the three-dimensional point cloud information D1 and the transmitter information D4 generated at the same timing from the storage device 102, and detects a moving object from the three-dimensional point cloud information D1. Specifically, the arithmetic circuit 101 sets the position of the transmitter 30B specified by the transmitter information D4 in the three-dimensional point cloud information D1 as the position of the moving object holding the transmitter 30B. At this time, the arithmetic circuit 30 can perform alignment by using the position information of the three-dimensional point cloud acquisition device 20B at the time of acquiring the three-dimensional point cloud information D1 associated with the three-dimensional point cloud information D1, and can specify the position of the transmitter 30B in the three-dimensional point cloud information D1.

### (Extraction and Annotation of Region of Moving Object)

The arithmetic circuit 101 extracts a predetermined region as a region of moving object based on the detected position of the moving object. Specifically, the arithmetic circuit 101 extracts, as the region of moving object, a region specified by the moving object size information associated with the identification information of the transmitter 30B included in the transmitter information D4 in the moving object information D5.

In addition, the arithmetic circuit 101 labels the extracted region of moving object. Specifically, the arithmetic circuit 101 can annotate the region of moving object by assigning a label associated with the identification information of the transmitter 30B in the moving object information D5.

### <<Region Extraction Method>>

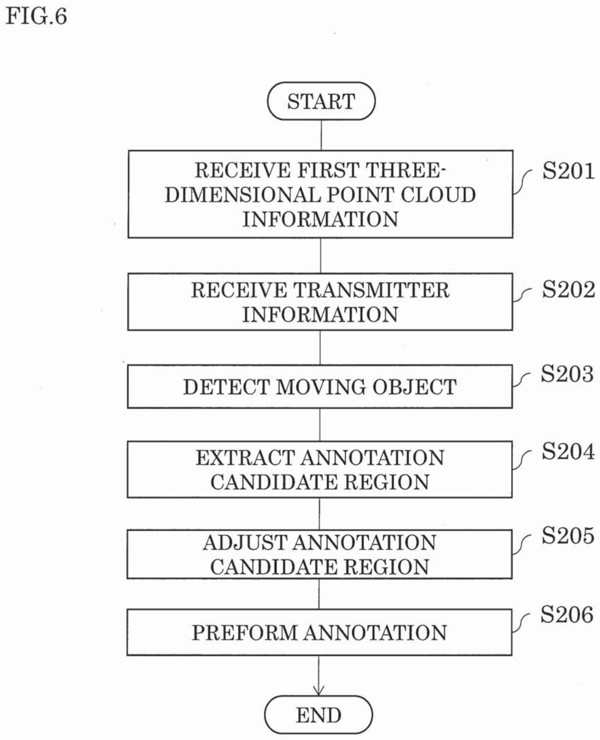

A region extraction method using the region extraction device 10B according to the second embodiment will be described with reference to a flowchart illustrated in Fig. 6. Since specific processing of individual steps of the flowchart has been described above, each step will be described in a simplified manner.

First, the arithmetic circuit 101 receives the three-dimensional point cloud information D1 acquired by the three-dimensional point cloud acquisition device 20B (S201). At this time, the arithmetic circuit 101 stores the received three-dimensional point cloud information D1 in the storage device 102.

In addition, the arithmetic circuit 101 receives the transmitter information D4 from the transmitter 30B as the reference information (S202). At this time, the arithmetic circuit 101 stores the received transmitter information D4 in the storage device 102.

Subsequently, the arithmetic circuit 101 obtains the position of the moving object in the three-dimensional point cloud information D1 using the three-dimensional point cloud information D1 received in step S201 and the transmitter information D4 received in step S202, and detects the moving object from the three-dimensional point cloud information D1 (S203).

Thereafter, the arithmetic circuit 101 refers to the moving object information D5 stored in the storage device 102, and extracts from the three-dimensional point cloud information D1 the region of the moving object detected in step S203 as the annotation candidate region (S204).

Next, the arithmetic circuit 101 may display the three-dimensional point cloud information D1 including the annotation candidate region extracted in step S204 on the output device 105, and allow the user to adjust the annotation candidate region (S205).

In addition, the arithmetic circuit 101 associates the label information of the moving object associated by the moving object information D5 with the annotation candidate region extracted in step S204 or the annotation candidate region adjusted in step S205, and performs annotation (S206).

Note that the order of the processing illustrated in the flowchart of Fig. 6 is not necessarily limited thereto. For example, for processes that can be rearranged, the order of some processes may be rearranged. Furthermore, for example, a plurality of processes that can be executed simultaneously may be executed simultaneously.

As described above, in the region extraction system 1B according to the second embodiment, the identification information of the transmitter 30B held by the moving object can be used. Therefore, not only the extraction of the region of moving object but also the annotation to the region of moving object extracted with respect to the three-dimensional point cloud information can be easily realized.

### <Third Embodiment>

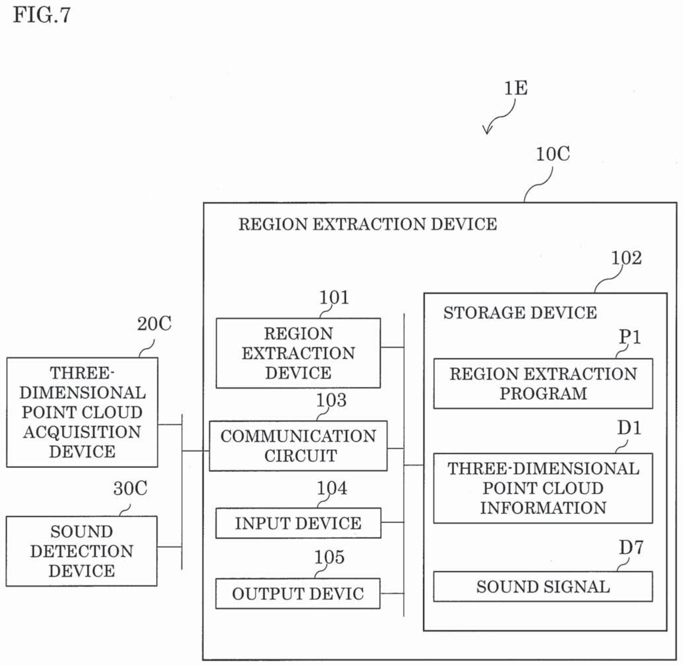

As illustrated in Fig. 7, a region extraction system 1C according to the third embodiment includes a region extraction device 10C, a three-dimensional point cloud acquisition device 20C, and a sound detection device 30C. Here, a moving object has a property of emitting a sound. In addition, the region extraction system 1C uses a sound signal emitted from the moving object as the reference information.

### <<Three-Dimensional Point cloud Acquisition Device>>

The three-dimensional point cloud acquisition device 20C is the same as the three-dimensional point cloud acquisition device 20A described above with reference to Fig. 1, but specifies the position of the own device similarly to the three-dimensional point cloud acquisition device 20B described above with reference to Fig. 5, and transmits three-dimensional point cloud information D1 in which the position of the own device is associated to the region extraction device 10C.

### <<Sound Detection Device>>

The sound detection device 30C is arranged in a space that is an extraction target of the moving object, and acquires a sound signal. In addition, the sound detection device 30C transmits the acquired sound signal to the region extraction device 10C as reference information in association with the timing at which the sound signal is acquired. For example, the sound detection device 30C is a directional microphone, and can specify the direction in which the sound signal is emitted using the acquired sound signal. In addition, in a case where the moving object is a forklift or the like, by detecting an alert sound emitted from an object other than the moving object, it is possible to specify a direction in which a sound signal is emitted while distinguishing it from surrounding noise. Note that Fig. 7 illustrates only one sound detection device 30C, but the number of sound detection devices 30C used in the region extraction system 1C is not limited.

### <<Region Extraction Device>>

The region extraction device 10C is an information processing device including the arithmetic circuit 101, the storage device 102, the communication circuit 103, the input device 104, the output device 105, and the like, similarly to the region extraction device 10A described above with reference to Fig. 1. The storage device 102 of the region extraction device 10C is different from the storage device 102 of the region extraction device 10A described above with reference to Fig. 1 in that a moving object extraction program P4 used for extracting a region of moving object, the three-dimensional point cloud information D1 acquired from the three-dimensional point cloud acquisition device 20C, and a sound signal D7 which is reference information are stored. The region extraction device 10C specifies the direction of the sound using the sound signal and detects the moving object in the specified direction.

### (Acquisition of Three-Dimensional Point cloud Information)

The arithmetic circuit 101 receives the three-dimensional point cloud information D1 acquired by the three-dimensional point cloud acquisition device 20C. In addition, the arithmetic circuit 101 stores the received three-dimensional point cloud information D1 in the storage device 102.

### (Acquisition of Sound Signal)

The arithmetic circuit 101 receives the sound signal D7 acquired by the sound detection device 30C as the reference information. The arithmetic circuit 101 stores received sound signal D7 in the storage device 102.

### (Identification of Sound Orientation)

The arithmetic circuit 101 reads the sound signal D7 from the storage device 102, and specifies an orientation in which the sound signal is generated.

### (Extraction of Moving Object Candidate Region)

The arithmetic circuit 101 specifies an annotation candidate region by using the orientation in which the sound signal D7 is emitted obtained from the sound signal D7 which is reference information, and extracts the annotation candidate region as a region of moving object. Since it is difficult to strictly extract the region only with the sound signal, the arithmetic circuit 101 extracts the region in a wide range in which the moving object can be considered to exist.

### <<Region Extraction Method>>

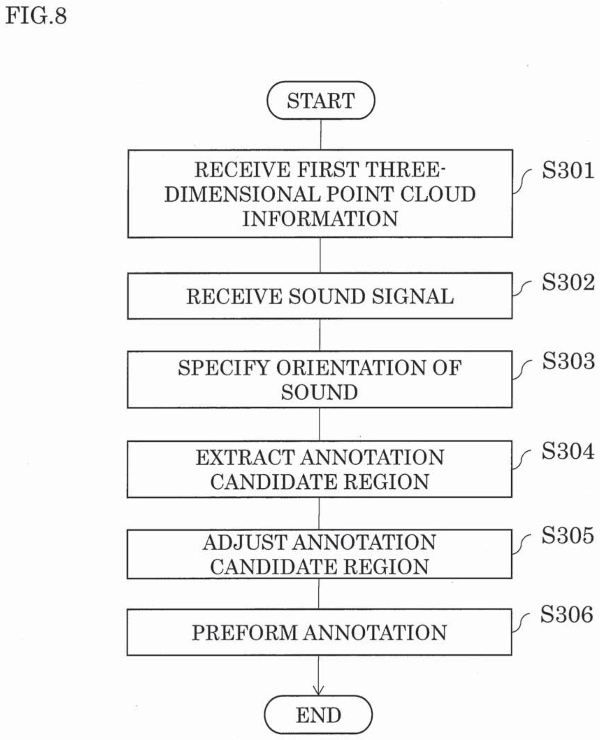

A region extraction method using the region extraction device 10C according to the third embodiment and subsequent annotations will be described with reference to a flowchart illustrated in Fig. 8. Since specific processing of individual steps of the flowchart has been described above, each step will be described in a simplified manner.

First, the arithmetic circuit 101 receives the three-dimensional point cloud information D1 acquired by the three-dimensional point cloud acquisition device 20C (S301). At this time, the arithmetic circuit 101 stores the received three-dimensional point cloud information D1 in the storage device 102.

Arithmetic circuit 101 receives the sound signal D7 as the reference information from the sound detection device 30C (S302). At this time, the arithmetic circuit 101 stores received sound signal D7 in the storage device 102.

Subsequently, the arithmetic circuit 101 specifies the orientation of the sound using the sound signal D7 received in step S302 (S303).

Next, the arithmetic circuit 101 extracts an annotation candidate region from the three-dimensional point cloud information D1 by using the three-dimensional point cloud information D1 received in step S301 and the orientation of the sound specified in step S303 (S304). Since the annotation candidate region specified here is based only on the orientation of the sound, a wide range is selected as compared with other embodiments.

Thereafter, the arithmetic circuit 101 displays the three-dimensional point cloud information D1 including the annotation candidate region extracted in step S304 on the output device 105, and allows the user to adjust the annotation candidate region (S305).

Furthermore, the arithmetic circuit 101 may add a label to the annotation candidate region extracted in step S305 or the annotation candidate region adjusted in step S305, and perform annotation (S306).

Note that the order of the processing illustrated in the flowchart of Fig. 8 is not necessarily limited thereto. For example, for processes that can be rearranged, the order of some processes may be rearranged. Furthermore, for example, a plurality of processes that can be executed simultaneously may be executed simultaneously.

As described above, in the region extraction system 1C according to the third embodiment, the annotation candidate region can be extracted using the orientation of the sound emitted from the moving object. For example, regarding an automobile such as a forklift, it is common to cause a relatively large sound to be made during movement. In addition, it is conceivable that a constant machine sound is generated even when the robot or the like moves. In the third embodiment, in such a case, the candidate region of the annotation can be extracted using sound.

### <Modification 1 >

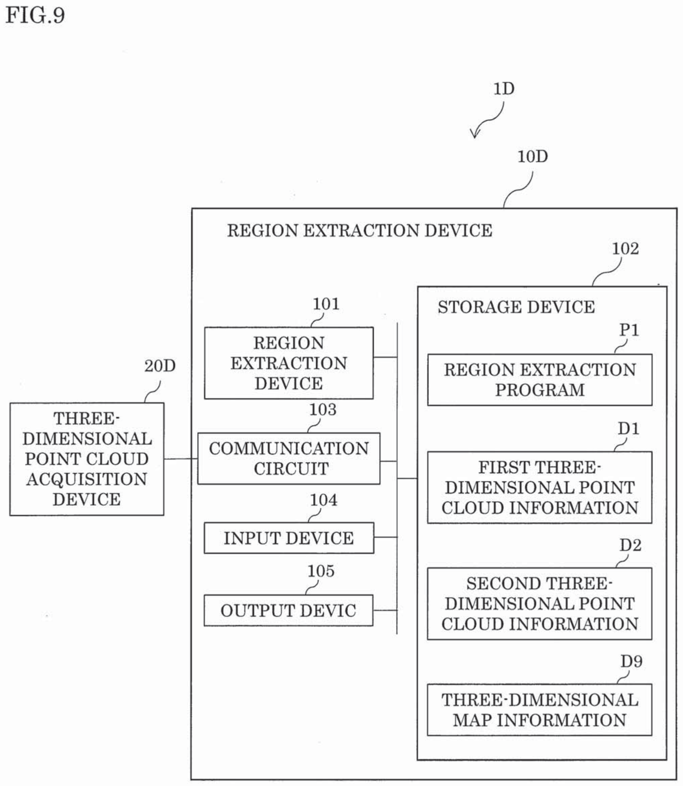

Fig. 9 illustrates a region extraction system 1D according to a first modification of the first embodiment. In the region extraction system 1A described above with reference to Fig. 1, an example in which the three-dimensional point cloud acquisition device 20A is fixed has been described. The region extraction system 1D according to the modification 1 is an example in which a three-dimensional point cloud acquisition device 20D is of a movable type. Therefore, the first three-dimensional point cloud information D1 and the second three-dimensional point cloud information D2 not only have different acquisition timings, but also have different positions of the three-dimensional point cloud acquisition device 20D at the time of acquisition. Therefore, the first three-dimensional point cloud information D1 and the second three-dimensional point cloud information D2 may be information in different ranges.

### <<Three-Dimensional Point cloud Acquisition Device>>

The three-dimensional point cloud acquisition device 200D performs self-position estimation when acquiring the three-dimensional point cloud information D1 and the second three-dimensional point cloud information D2. In addition, the three-dimensional point cloud acquisition device 200D provides the region extraction device 10D with each self-position at the timing of acquiring the three-dimensional point cloud information D1 and D2 acquired by the self-position estimation associated with each of the three-dimensional point cloud information D1 and D2.

### <<Region Extraction Device>>

The region extraction device 10D performs matching such that the same range among three-dimensional point cloud information D1 and D2 created at different positions becomes a comparison target, and thus the storage device 102 stores three-dimensional map information D9. When obtaining the difference between the three-dimensional point cloud information D1 and the second three-dimensional point cloud information D2, the arithmetic circuit 101 refers to the three-dimensional map information D9 stored in the storage device 102, and extracts the same range from the first three-dimensional point cloud information D1 and the second three-dimensional point cloud information D2 by using the position information associated with each of the first three-dimensional point cloud information D1 and the second three-dimensional point cloud information D2. In addition, the arithmetic circuit 101 obtains a difference from the point cloud information in the same range extracted from the first three-dimensional point cloud information D1 and the second three-dimensional point cloud information D2, and extracts the region of moving object.

As described above, in the region extraction system 1D of the first modification, even when the three-dimensional point cloud acquisition device 20D moves, the region of the moving object can be extracted from the two pieces of three-dimensional point cloud information acquired at different timings and at different positions.

### <Modification 2 >

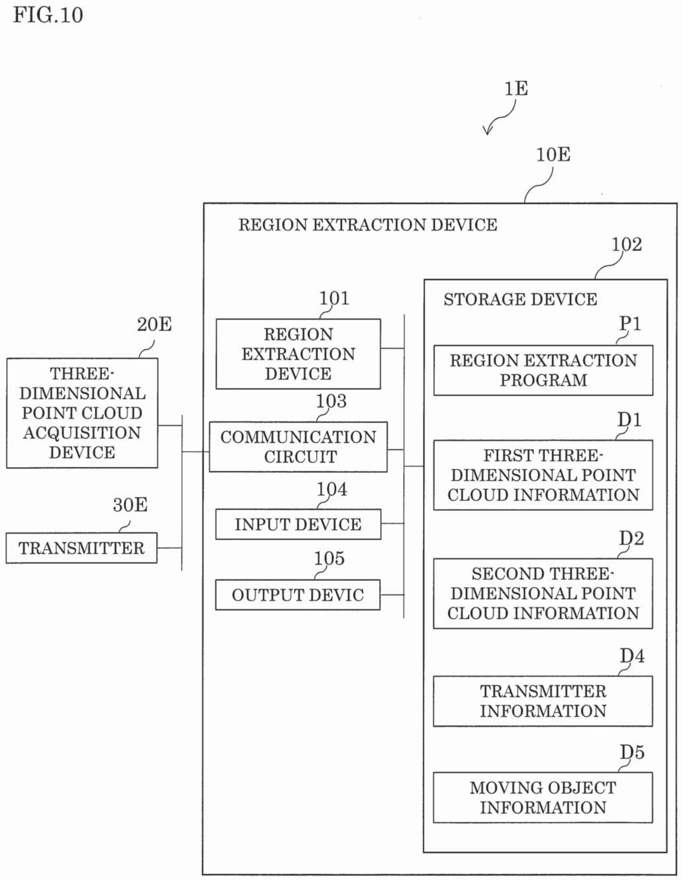

Fig. 10 illustrates a region extraction system 1E according to a modification 2 of the first embodiment. In the region extraction system 1A described above with reference to Fig. 1, the region of moving object is extracted only from the two pieces of three-dimensional point cloud information D1 and D2 acquired by the three-dimensional point cloud acquisition device 20A. In addition, in the region extraction system 1B described above with reference to Fig. 5, an example has been described in which the region of moving object is extracted and labeled using the three-dimensional point cloud information D1 acquired by the three-dimensional point cloud acquisition device 20B and the moving object information acquired from the transmitter 30B. The region extraction system 1E according to the modification 2 labels the region of moving object extracted using the two pieces of three-dimensional point cloud information D1 and D2 acquired by the three-dimensional point cloud acquisition device 20E using the identification information of the transmitter 30E and using the identification information of the moving object specified using the acquired transmitter information.

### <<Three-Dimensional Point cloud Acquisition Device>>

The three-dimensional point cloud acquisition device 20E provides the region extraction device 10E with the three-dimensional point cloud information D1 and the second three-dimensional point cloud information D2. Note that the three-dimensional point cloud acquisition device 200E is not limited to being fixed. As described in the modification 1, the three-dimensional point cloud acquisition device 20E may be variable as long as it is possible to perform self-position estimation and compare the same ranges of the three-dimensional point cloud information D1 and D2 in the region extraction device 10E.

### <<Transmitter>>

The transmitter 30E provides the region extraction device 10E with the transmitter information D4 including its own identification information and position information.

### <<Region Extraction Device>>

The region extraction device 10D obtains a difference between the first three-dimensional point cloud information D1 and the second three-dimensional point cloud information D2 in the arithmetic circuit 101, and extracts the region of moving object. In addition, the arithmetic circuit 101 refers to the transmitter information D4 and the moving object information D5 to specify the identification information of the moving object from the identification information of the transmitter 30E. Further, the arithmetic circuit 101 extracts a region of the moving object from the three-dimensional point cloud information D1 and perform labeling.

As described above, in the region extraction system 1E of the modification 2, the annotation can be realized in a multimodal manner by using the transmitter 30E in addition to the three-dimensional point cloud acquisition device 20E.

### <<Outline of Embodiments>>

(1) A region extraction method of the present disclosure is executed by an information processing device including an arithmetic circuit to extract a desired region corresponding a moving object from three-dimensional point cloud information. The method includes: in the arithmetic circuit, receiving three-dimensional point cloud information acquired by a three-dimensional point cloud acquisition device; receiving reference information that includes at least a part of a range of the three-dimensional point cloud information and is acquired under a condition different from the acquisition of the three-dimensional point cloud information; and comparing the three-dimensional point cloud information with the reference information, detecting the moving object, and extracting a region of the moving object from the three-dimensional point cloud information.
   As a result, it is possible to extract the region of the moving object to be the annotation candidate from the three-dimensional point cloud information.
(2) In the region extraction method of (1), the reference information is second three-dimensional point cloud information acquired at a timing different from the three-dimensional point cloud information by the three-dimensional point cloud acquisition device. The method may include, in extraction of the moving object, detecting the moving object by obtaining a difference between the three-dimensional point cloud information and the second three-dimensional point cloud information, and extracting a region of the moving object from the three-dimensional point cloud information.
   As a result, the region of the moving object can be extracted from the plurality of pieces of three-dimensional point cloud information acquired at different timings.
(3) In the region extraction method of (1), the reference information is information including identification information associated with the moving object and position information of the moving object and being transmitted from a transmitter held by the moving object. The method may include, in extraction of the moving object, referring to moving object information including identification information associated with the moving object and a size of the moving object, and extracting a region of the size of the moving object as a region of the moving object from the three-dimensional point cloud information based on a position specified by the position information included in the reference information from the three-dimensional point cloud information.
   As a result, the region of the moving object can be extracted from the three-dimensional point cloud information using the position information of the moving object acquired from the transmitter.
(4) In the region extraction method of (1), the moving object has a property of emitting a sound, the reference information is a sound signal acquired by a sound pickup device having directivity. The method may include, in extraction of the moving object, extracting, from the three-dimensional point cloud information, a region existing in an orientation in which the sound acquired from the sound signal is generated, as a candidate region of the moving object from the three-dimensional point cloud information.
   As a result, it is possible to extract the candidate region of the moving object using the sound emitted from the moving object.
(5) In the region extraction method of (2), the arithmetic circuit may receive information including identification information associated with the moving object together with the three-dimensional point cloud information, and extract a range according to a size of the moving object from the three-dimensional point cloud information as a region corresponding a moving object by referring to moving object information generated in advance and stored in a storage device, the moving object information including identification information associated with the moving object, a label associated with the moving object, and a size of the moving object, and assign a label associated with identification information of the moving object in the moving object information to the extracted region of the moving object.
   As a result, labeling can be performed together with extraction of the region of moving object.
(6) In the region extraction method of (3), the moving object information includes a label associated with the moving object, and the arithmetic circuit may assign a label associated with identification information of the moving object in the moving object information to a region of the moving object that is generated in advance and extracted.
   As a result, labeling can be performed together with extraction of the region of moving object.
(7) In the region extraction method of (2) or (5), the three-dimensional point cloud acquisition device has a self-position estimation function, and generates respective pieces of three-dimensional point cloud information by associating self-positions. The method may include, in extraction of the region of the moving object, comparing the three-dimensional point cloud information with the reference information in consideration of a self-position associated with the three-dimensional point cloud information.
   As a result, the region of moving object can be extracted using the three-dimensional point cloud information acquired at different positions.
(8) In the region extraction method of (2), (5), or (7), in comparison between the three-dimensional point cloud information and the reference information. The method may include dividing the three-dimensional point cloud information and the reference information into a plurality of corresponding voxels, comparing the corresponding voxels with each other, and extracting a region using presence or absence of point cloud in the voxel and a similarity of distribution of the point clouds between the voxels.

As a result, the region of moving object can be extracted by determining the similarity of the distribution of the point cloud.

A region extraction device of (9) is a region extraction device that extracts a desired region corresponding a moving object from three-dimensional point cloud information. The region extraction device includes an arithmetic circuit executing: receiving three-dimensional point cloud information acquired by a three-dimensional point cloud acquisition device; receiving reference information that includes at least a part of a range of the three-dimensional point cloud information and is acquired under a condition different from the acquisition of the three-dimensional point cloud information; and comparing the three-dimensional point cloud information with the reference information, detecting the moving object, and extracting a region of the moving object from the three-dimensional point cloud information.

As a result, it is possible to extract the region of the moving object to be the annotation candidate from the three-dimensional point cloud information.

The computer program of (10) causes an arithmetic circuit to execute the region extraction method according to any one of (1) to (8).

As a result, it is possible to extract the region of the moving object to be the annotation candidate from the three-dimensional point cloud information.

The region extraction method, the region extraction device, and the computer program according to all claims of the present disclosure are realized by cooperation with hardware resources, for example, a processor, a memory, and a computer program.

### INDUSTRIAL APPLICABILITY

The region extraction method, the region extraction device, and the computer program of the present disclosure are useful for simplifying the annotation.

## Claims

1. A region extraction method executed by an information processing device including an arithmetic circuit to extract a desired region corresponding a moving object from three-dimensional point cloud information, the method comprising:
by the arithmetic circuit,
receiving three-dimensional point cloud information acquired by a three-dimensional point cloud acquisition device;
receiving reference information that includes at least a part of a range of the three-dimensional point cloud information and is acquired under a condition different from the acquisition of the three-dimensional point cloud information; and
comparing the three-dimensional point cloud information with the reference information, detecting the moving object, and extracting a region of the moving object from the three-dimensional point cloud information.

2. The region extraction method according to claim 1, wherein the reference information is second three-dimensional point cloud information acquired at a timing different from the three-dimensional point cloud information by the three-dimensional point cloud acquisition device,
the method comprising, in extraction of the moving object, detecting the moving object by obtaining a difference between the three-dimensional point cloud information and the second three-dimensional point cloud information, and extracting a region of the moving object from the three-dimensional point cloud information.

3. The region extraction method according to claim 1, wherein the reference information is information including identification information associated with the moving object and position information of the moving object and being transmitted from a transmitter held by the moving object,
the method comprising, in extraction of the moving object, referring to moving object information including identification information associated with the moving object and a size of the moving object, and extracting a region of the size of the moving object as a region of the moving object from the three-dimensional point cloud information based on a position specified by the position information included in the reference information from the three-dimensional point cloud information.

4. The region extraction method according to claim 1, wherein
the moving object has a property of emitting a sound, and
the reference information is a sound signal acquired by a sound pickup device having directivity,
the method comprising, in extraction of the moving object, extracting, from the three-dimensional point cloud information, a region existing in an orientation in which the sound acquired from the sound signal is generated, as a candidate region of the moving object from the three-dimensional point cloud information.

5. The region extraction method according to claim 2, wherein the arithmetic circuit
receives information including identification information associated with the moving object together with the three-dimensional point cloud information, and
extracts a range according to a size of the moving object from the three-dimensional point cloud information as a region corresponding a moving object by referring to moving object information generated in advance and stored in a storage device, the moving object information including identification information associated with the moving object, a label associated with the moving object, and a size of the moving object, and
assigns a label associated with identification information of the moving object in the moving object information to the extracted region of the moving object.

6. The region extraction method according to claim 3, wherein
the moving object information includes a label associated with the moving object, and
the arithmetic circuit assigns a label associated with identification information of the moving object in the moving object information to a region of the moving object that is generated in advance and extracted.

7. The region extraction method according to claim 2, wherein the three-dimensional point cloud acquisition device has a self-position estimation function, and generates respective pieces of three-dimensional point cloud information by associating self-positions,
the method comprising, in extraction of the region of the moving object, comparing the three-dimensional point cloud information with the reference information in consideration of a self-position associated with the three-dimensional point cloud information.

8. The region extraction method according to claim 2, comprising, in comparison between the three-dimensional point cloud information and the reference information, dividing the three-dimensional point cloud information and the reference information into a plurality of corresponding voxels, comparing the corresponding voxels with each other, and extracting a region using presence or absence of point cloud in the voxel and a similarity of distribution of the point clouds between the voxels.

9. A region extraction device that extracts a desired region corresponding a moving object from three-dimensional point cloud information, the region extraction device comprising an arithmetic circuit executing:
receiving three-dimensional point cloud information acquired by a three-dimensional point cloud acquisition device;
receiving reference information that includes at least a part of a range of the three-dimensional point cloud information and is acquired under a condition different from the acquisition of the three-dimensional point cloud information; and
comparing the three-dimensional point cloud information with the reference information, detecting the moving object, and extracting a region of the moving object from the three-dimensional point cloud information.

10. A computer program causing the arithmetic circuit to execute the region extraction method according to claim 1.
